# EUROPÄISCHE PATENTSCHRIFT

(11) **EP 3 601 833 B1**
(45) Veröffentlichungstag und Bekanntmachung des Hinweises auf die Patenterteilung: **07.09.2022**
(21) Anmeldenummer: 18715514.8
(22) Anmeldetag: 19.03.2018
(51) Int. Cl.: F16D 55/226, F16D 66/02

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 23.03.2017 DE 102017106254
(43) Veröffentlichungstag der Anmeldung: 05.02.2020
(73) Patentinhaber: KNORR-BREMSE Systeme für Nutzfahrzeuge GmbH, 80809 München (DE)
(72) Erfinder: HABERMANN, Dimitrij, 94569 Stephansposching (DE)
(86) Internationale Anmeldenummer: PCT/EP2018/056899
(87) Internationale Veröffentlichungsnummer: WO 2018/172289

(56) Entgegenhaltungen:
- EP-A1- 3 032 131
- EP-A1- 3 121 477
- WO-A1-2016/177474
- DE-A1- 3 612 166
- DE-A1-102006 029 042
- DE-A1-102015 104 916

## Beschreibung

Die Erfindung betrifft eine Scheibenbremse für ein Nutzfahrzeug gemäß dem Oberbegriff des Anspruchs 1.

Zur Überwachung der Betriebssicherheit von Scheibenbremsen für Nutzfahrzeuge sind die Scheibenbremsen üblicherweise mit Verschleißerkennungseinrichtungen ausgestattet, mithilfe derer ein Verschleiß von Bremsbelägen und/oder der Bremsscheibe erkennbar ist. Mithilfe solcher Verschleißerkennungseinrichtungen kann ein erforderlicher Austausch der betroffenen Bauteile, sprich der Bremsbeläge oder der Bremsscheibe zu einem bestmöglichen Zeitpunkt erfolgen.

Zur Feststellung des Verschleißzustandes der Bremsbeläge oder der Bremsscheibe sind aus dem Stand der Technik unterschiedliche konstruktive Lösungen bekannt. So ist es beispielsweise aus der DE 10 2015 104 916 A1 bekannt, am Bremsträger ein als streifenförmiges Blechstück ausgebildetes Vergleichselement zu befestigen, mit dem die Relativposition des relativ zum Bremsträger verschiebbaren Bremssattels relativ zu der ortsfest am Bremsträger befestigten Vergleichselement erkennbar ist.

Aus der DE 10 2006 029 042 A1 ist es bekannt, an den beiden voneinander entfernten Enden eines plattenförmigen Bremsträgers zu beiden Seiten des Belagschachts Vorsprünge mit daran achsabgewandt ausgebildeten Flächen vorzusehen, denen in geringem Abstand Flächen des Bremssattels gegenüber liegen, die sich in Achsrichtung der Scheibenbremse erstrecken. Erreichen die Vorsprünge des Bremsträgers eine Stufe zwischen zwei benachbarten Flächen des Bremssattels, ist dies ein Zeichen eines weit fortgeschrittenen Verschleißes der Reibbeläge der Bremsbeläge.

Aus der EP 3 121 477 A1 ist eine Scheibenbremse mit gegossenem Bremsträger und Bremssattel bekannt, wobei sowohl am Bremsträger als auch am Bremssattel Materialvorsprünge mit im Wesentlichen ebenen, parallel zur Bremsscheibenfläche ausgerichteten Flächen zur visuellen Verschleißerkennung vorgesehen sind. Bekannt sind auch Verschleißanzeigen, die mittels Drehpotentiometer eine Verfahrstellung einer Nachstelleinrichtung ermitteln, die sich beim Nachstellen des Bremssattels infolge des Verschleißes der Bremsbeläge ergibt.

Aus der DE 36 12 166 C2 ist es bekannt, zur visuellen Erkennung des Verschleißzustandes der Bremsbeläge bzw. der Bremsscheibe den Bremsträger mit einer Markierung zu versehen, die in Korrespondenz mit einer entsprechend modifizierten Belagträgerplatte eines Bremsbelags der Verschleißerkennung dient.

Nachteilig an den aus dem Stand der Technik bekannten Verschleißerkennungseinrichtungen ist im Falle des Einsatzes von Drehpotentiometern und dergleichen der erhebliche bauliche Aufwand zur Integrierung solcher Bauteile bzw. im zweiteren Falle die visuelle Erkennbarkeit im montierten Zustand des Fahrzeugrads.

So sind letztere üblicherweise nur bei demontiertem Fahrzeugrad erkennbar, was einer angestrebten einfachen Verwendung einer solchen Verschleißerkennungseinrichtung entgegensteht.

Aufgabe der vorliegenden Erfindung ist es, eine Scheibenbremse der gattungsgemäßen Art derart weiterzuentwickeln, dass mit geringem konstruktivem und fertigungstechnischem Aufwand eine einfache, zuverlässige und genaue Erkennung des Verschleißzustandes der Bremsbeläge und/oder der Bremsscheibe ermöglicht ist.

Diese Aufgabe wird durch eine Scheibenbremse mit den Merkmalen des Anspruchs 1 gelöst.

Die erfindungsgemäße Scheibenbremse für ein Nutzfahrzeug weist einen eine Bremsscheibe übergreifenden Bremsträger mit einem Flanschbereich zur Festlegung des Bremsträgers an einer Fahrzeugachse des Nutzfahrzeugs und einem Aufnahmebereich zur Abstützung wenigstens eines Bremsbelages auf.

Die Scheibenbremse weist des Weiteren einen in Richtung einer Drehachse der Bremsscheibe axial verschiebbar am Bremsträger gehaltenen Bremssattel auf.

Beidseits der Bremsscheibe sind Bremsbeläge innerhalb des Bremssattels positionierbar, die bei einer Bremsung mittels einer Zuspanneinrichtung gegen die Bremsscheibe gepresst werden können.

Die Scheibenbremse weist des Weiteren eine Einrichtung zur visuellen Verschleißerkennung eines Bremsscheiben- und/oder Bremsbelagverschleißes auf.

Diese Einrichtung zur visuellen Verschleißerkennung weist einen im Flanschbereich des Bremsträgers angeformten Materialvorsprung und eine am Bremssattel angeformte, senkrecht zur Verschieberichtung des Bremssattels ausgerichtete mechanisch nachbearbeitete ebene Referenzfläche auf.

Der Materialvorsprung weist mehrere in Verschieberichtung des Bremssattels hintereinander und senkrecht zur Verschieberichtung des Bremssattels ausgerichtete mechanisch nachbearbeitete ebene Flächen auf, wobei die Flächen des Materialvorsprungs und die Referenzfläche des Bremssattels derart positioniert sind, dass sie aus einer vorbestimmten Blickrichtung gleichzeitig visuell erkennbar sind.

Mit einer solchermaßen ausgebildeten Scheibenbremse ist es in einfacher Weise ermöglicht, den Verschleißzustand der Bremsbeläge und/oder der Bremsscheibe durch visuelle Überprüfung auch bei montiertem Fahrzeugrad festzustellen, da die am Bremsträger angeformten Flächen und die Referenzfläche am Bremssattel im Flanschbereich des Bremsträgers angeformt sind, der auch bei montiertem Fahrzeugrad einsehbar ist.

Die Anformung solcher Flächen am Bremsträger bzw. am Bremssattel ist beim Gießen des Bremsträger und des Bremssattels in einfacher Weise ermöglicht.

Die Flächen des Materialvorsprungs und die Referenzfläche am Bremssattel sind mechanisch, insbesondere spanend nachbearbeitet, um die Genauigkeit der Verschleißanzeige nochmals zu verbessern.

Durch die mechanische Nachbearbeitung der zur visuellen Verschleißerkennung dienenden Flächen ist es insbesondere auch ermöglicht, in Zusammenschau mit einem Summenverschleißsensor der Scheibenbremse auch einen Differenzverschleiß zwischen einem inneren und äußeren Bremsbelag zu ermitteln. Dazu ist eine genaue Ablesbarkeit der optischen Verschleißanzeige erforderlich, die nur mit bearbeiteten Flächen realisiert werden kann, da die Fläche eines Rohgusses eine solch genaue Ablesbarkeit nicht ermöglicht.

Vorteilhafte Ausführungsvarianten der Erfindung sind Gegenstand der Unteransprüche.

Gemäß einer vorteilhaften Ausführungsvariante der erfindungsgemäßen Scheibenbremse ist eine der Bremsscheibe nahe erste Fläche des Materialvorsprungs so positioniert, dass diese in einer mit der Referenzfläche des Bremssattels fluchtenden Position des Bremssattels den verschleißfreien Neuzustand der Bremsscheibe und der Bremsbeläge anzeigt, während eine der Bremsscheibe ferne zweite Fläche des Materialvorsprungs so positioniert ist, dass diese in einer mit der Referenzfläche des Bremssattels fluchtenden Position des Bremssattels ein maximal zulässiges Verschleißmaß anzeigt.

Dadurch ist in einfacher Weise der Neuzustand und der optimale Austauschzustand der Bremsbeläge und/oder der Bremsscheibe erkennbar.

Gemäß einer weiteren bevorzugten Ausführungsvariante ist zwischen der der Bremsscheibe nahen ersten Fläche und der der Bremsscheibe fernen zweiten Fläche eine dritte Fläche so positioniert, dass diese in einer mit der Referenzfläche des Bremssattels fluchtenden Position des Bremssattels das halbe maximal zulässige Verschleißmaß anzeigt, womit die bei nur zwei Flächen gemäß der zuvor genannten Ausführungsvariante notwendige Abschätzung von Zwischenzuständen von teilverschlissenen Bremsscheiben bzw. Bremsbelägen nochmals besser abgeschätzt werden können.

Gemäß einer weiteren vorteilhaften Ausführungsvariante der Erfindung weist der Materialvorsprung eine auf einer dem Bremssattel zugewandten Oberfläche des Flanschbereichs sich in Richtung des Bremssattels erstreckende Erhebung auf, deren Flanken die erste Fläche und die zweite oder dritte Fläche bilden.

Die Ausbildung einer solchen Erhebung hat den weiteren Vorteil, dass die Fläche des Materialvorsprungs und der Referenzfläche am Bremssattel im montierten Zustand noch näher zusammengeführt sind, was das Ablesen des Verschleißzustandes nochmals erleichtert.

Besonders bevorzugt sind die zweite Fläche und die dritte Fläche stufig zueinander angeformt, was insbesondere die Herstellung der Flächen beim Gießen des Bremsträgers vereinfacht.

Die Flächen des Materialvorsprungs sind bevorzugt als beim Gießen des Bremsträgers geformte Gussflächen ausgebildet.

Nach einer weiteren bevorzugten Ausführungsvariante weist die Scheibenbremse einen Summenverschleißsensor zur Ermittlung eines Gesamtverschleißwertes aus Bremsscheibenverschleiß sowie des Verschleißes der Bremsbeläge auf. Dadurch ist es ermöglicht, auch einen Differenzverschleiß zwischen einem zuspannseitigen Bremsbelag und einem reaktionsseitigen Bremsbelag zu ermitteln.

Nachfolgend werden bevorzugte Ausführungsvarianten der Erfindung anhand der beiliegenden Zeichnungen näher erläutert. Es zeigen:
- Fig. 1: eine schematische perspektivische Ansicht eines Ausschnitts einer Scheibenbremse mit Darstellung eines Teilstücks des Bremsträgers und des an diesem montierten Bremssattels,
- Fig. 2: eine perspektivische Ansicht einer Ausführungsvarianten eines erfindungsgemäßen Bremsträgers mit daran angeformtem Materialvorsprung,
- Fig. 3: eine perspektivische Darstellung eines Teilstücks eines Bremssattels mit daran angeformter Referenzfläche,
- Fig. 4: eine Seitenansicht des Bremsträgers und des Bremssattels in einer den Neu- bzw. unverschlissenen Zustand der Bremsbeläge und/oder der Bremsscheibe,
- Fig. 5: eine der Fig. 4 entsprechende Darstellung des Bremssattels und des Bremsträgers in einer Position des Bremssattels, der das maximal zulässige Verschleißmaß anzeigt,
- Fig. 6: eine den Fig. 4 und 5 entsprechende Darstellung des Bremssattels und des Bremsträgers in einer Zwischenposition des Bremssattels, die bevorzugt das halbe zulässige Verschleißmaß anzeigt, und
- Fig. 7 und 8: jeweilige Seitenansichten der Scheibenbremse mit Darstellung des Bremsträgers, des Bremssattels sowie der Bremsscheibe und an dieser anliegender Brembeläge in ungleichmäßig teilverschlissenem Zustand.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, Bremsscheibe, Bremsträger, Bremssattel, Flanschbereich, Referenzfläche, Flächen, Materialvorsprung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

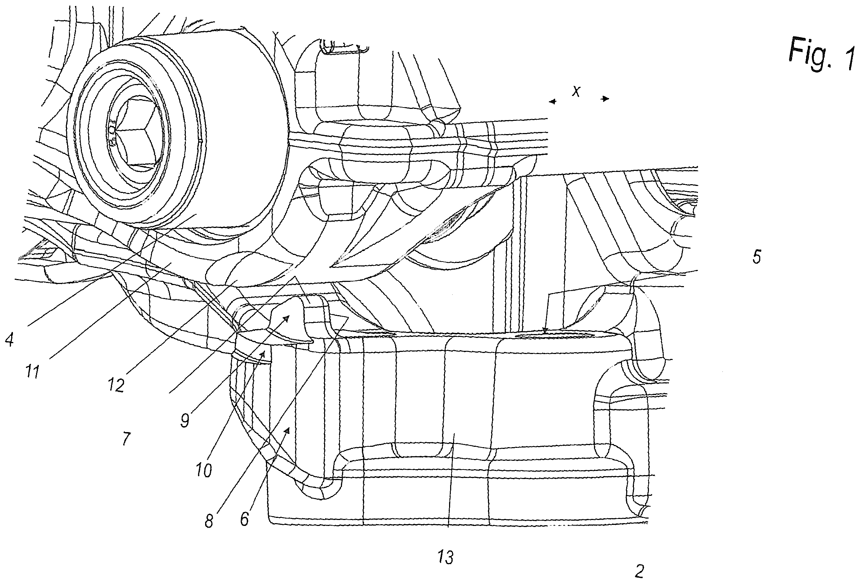

In **Fig. 1** ist mit dem Bezugszeichen 2 ein Bremsträger einer Scheibenbremse 1 eines Nutzfahrzeugs bezeichnet. Der Bremsträger 2 weist einen Flanschbereich 13 auf, der der Festlegung des Bremsträgers 2 an einer Fahrzeugachse oder einem anderen ortsfesten Karosserieteil des Nutzfahrzeugs dient. Zur Festlegung des Bremsträgers 2 dienen dabei bevorzugt Schraubbolzen, die durch Bohrungen 5 im Flanschbereich 13 des Bremsträgers 2 hindurchgeführt sind.

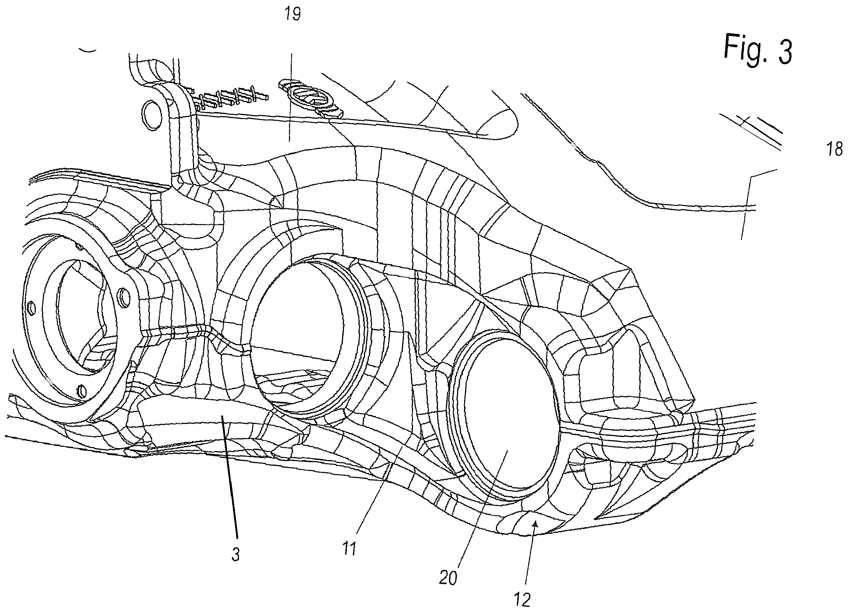

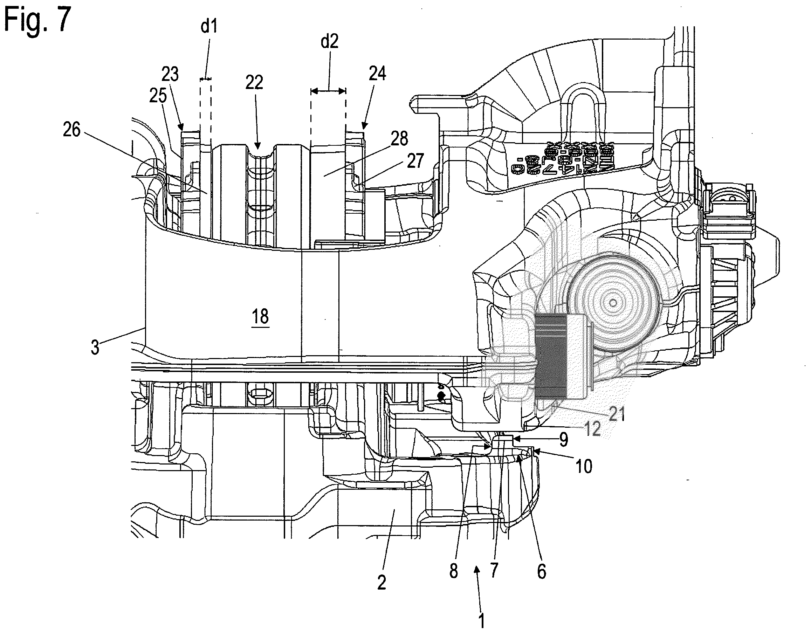

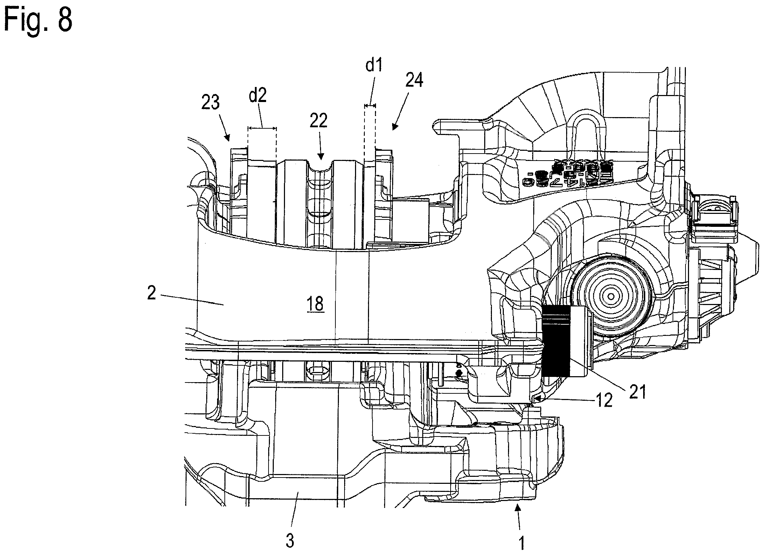

Des Weiteren ist in Fig. 3 mit dem Bezugszeichen 3 ein Bremssattel bezeichnet, der als am fahrzeugseitigen Bremsträger 2 in eine Verschieberichtung x, wie einer Drehachse einer Bremsscheibe 22, gezeigt in den **Figuren 7** **und** **8**, der Scheibenbremse 1 entspricht, verschiebbarer Schiebesattel ausgebildet, der die Bremsscheibe 22 übergreift.

Zur verschiebbaren Halterung des Bremssattels 3 am Bremsträger 2 sind bevorzugt zwei Führungsholme 4 vorgesehen, von denen einer in Fig. 1 dargestellt ist.

In dem Bremssattel 3 bzw. dem Bremsträger 2 sind zwei Bremsbeläge 23, 24 , gezeigt in den Figuren 7 und 8, angeordnet, die bei einer Bremsung mittels einer am Bremssattel 3 positionierten Zuspanneinrichtung gegen die Bremsscheibe 22 pressbar sind. Jeder Bremsbelag 23, 24 besteht dabei aus einer Belagträgerplatte 25, 27 und einem die Bremsscheibe 22 im Fall einer Bremsung kontaktierenden Reibbelag 26, 28. Der zuspannseitige Bremsbelag 24 wird dabei durch (nicht gezeigte) Druckstücke ohne Verschiebung des Bremssattels 3 gegen die Bremsscheibe 22 gedrückt. Sobald der zuspannseitige Bremsbelag 24 sich in Kontakt mit der Bremsscheibe 22 befindet, wird durch die dabei entstehende Gegenkraft der Bremssattel 3 zusammen mit dem sattelrückenseitigen, reaktionsseitigen Bremsbelag 23 in Richtung Bremsscheibe 22 geschoben, bis auch der reaktionsseitige Bremsbelag 23 an der Bremsscheibe 22 anliegt.

Sowohl die Reibbeläge 26, 28 der Bremsbeläge 23, 24 als auch die Reibflächen der Bremsscheibe 22 unterliegen einem Verschleiß im Sinne eines Abriebs, durch den sich die Stellung des Bremssattels 3 gegenüber dem Bremsträger 2 verändert

Dementsprechend ist es möglich, anhand der Relativposition des Bremssattels 3 zum Bremsträger 2 in einer Nichtbremsstellung auf das Verschleißmaß der Bremsbeläge 23, 24 und der Bremsscheibe 22 zu schließen.

Zur Ermöglichung einer einfachen visuellen Überprüfbarkeit des Verschleißzustandes der Bremsbeläge 23, 24 und/oder der Bremsscheibe 22, insbesondere zur Erkennung des Erreichens einer zulässigen Verschleißgrenze, weist die Scheibenbremse 1 eine Einrichtung zur visuellen Verschleißerkennung des Bremsscheiben- und/oder Bremsbelagverschleißes auf.

Diese Einrichtung weist einen im Flanschbereich 13 des Bremsträgers 2 angeformten Materialvorsprung 6 sowie eine am Bremssattel 3 angeformte, senkrecht zur Verschieberichtung x des Bremssattels 3 ausgerichtete ebene Referenzfläche 12 auf, wie es beispielsweise in Fig. 1 gezeigt ist.

Die Referenzfläche 12 und der Materialvorsprung 6 am Bremsträger 2 sind an nahe beieinander liegenden Bereichen des Bremssattels 3 bzw. des Bremsträgers 2, betrachtet im montierten Zustand des Bremssattels 3 am Bremsträger 2, vorgesehen.

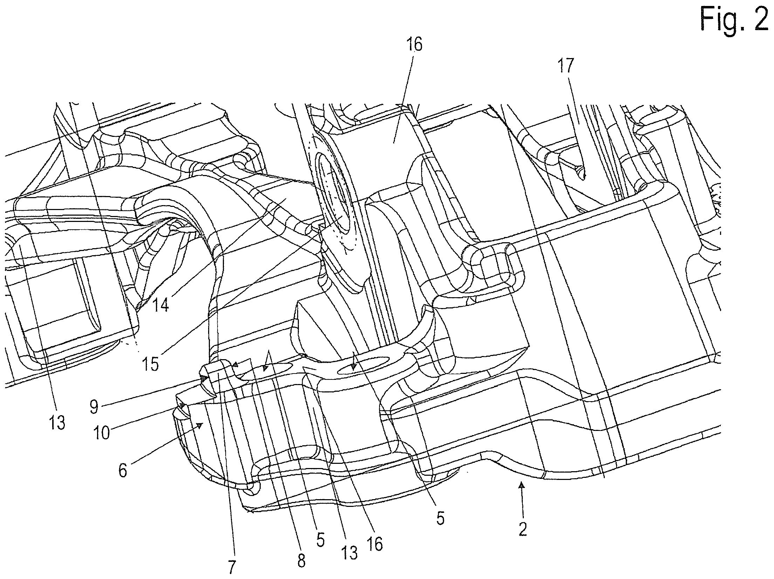

Der Materialvorsprung 6 des Bremsträgers 2 weist, wie in Fig. 1 und der in Fig. 2 gezeigten Einzeldarstellung des Bremsträgers 2 dargestellt ist, mehrere in Verschieberichtung des Bremssattels 3 hintereinander und senkrecht zur Verschieberichtung x des Bremssattels 3 ausgerichtete ebene Flächen 8, 9, 10 auf.

Die Flächen 8, 9 und 10 des Materialvorsprungs 6 und die Referenzfläche 12 des Bremssattels 3 sind derart am Bremsträger 2 bzw. am Bremssattel 3 positioniert, dass sie aus einer vorbestimmten Blickrichtung gleichzeitig visuell erkennbar sind. Die Blickrichtung ist dabei bevorzugt eine Richtung senkrecht zur Verschieberichtung des Bremssattels 3 und hier besonders bevorzugt auch senkrecht zur Erhebungsrichtung des Materialvorsprungs 6 aus dem Bremsträger 2.

Gut erkennbar ist die Relativposition der Flächen 8, 9, 10 und der Referenzfläche 12 zueinander auch aus winkligen Positionen zu der Richtung senkrecht zur Erhebungsrichtung des Materialvorsprungs 6.

Wie in Fig. 2 des Weiteren gezeigt ist, ist der Materialvorsprung 6 am fahrzeugseitigen Rand des Flanschbereichs 13 des Bremsträgers 2 angeformt.

Der Materialvorsprung 6 weist dabei bevorzugt eine auf einer dem Bremssattel 3 zugewandten Oberfläche 16 des Flanschbereichs 13 sich in Richtung des Bremssattels 3 erstreckende Erhebung 7 oder Nase auf.

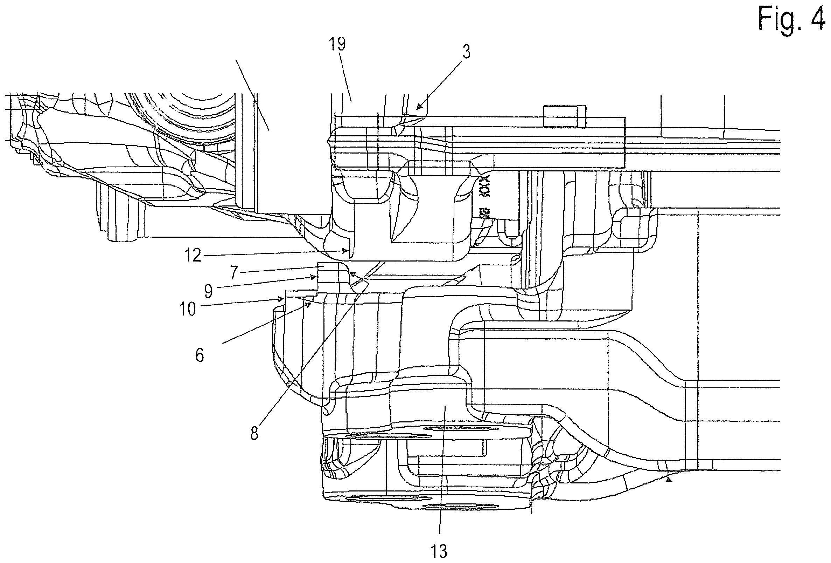

Eine der Bremsscheiben nahe erste Fläche 8 des Materialvorsprungs 6 ist bevorzugt so positioniert, dass diese in einer mit der Referenzfläche 12 des Bremssattels 3 fluchtenden Position des Bremssattels 3 den verschleißfreien Neuzustand der Bremsscheibe 22 und der Bremsbeläge 23, 24 anzeigt. Diese Relativposition des Bremsträgers 2 zum Bremssattel 3 ist in **Fig. 4** dargestellt.

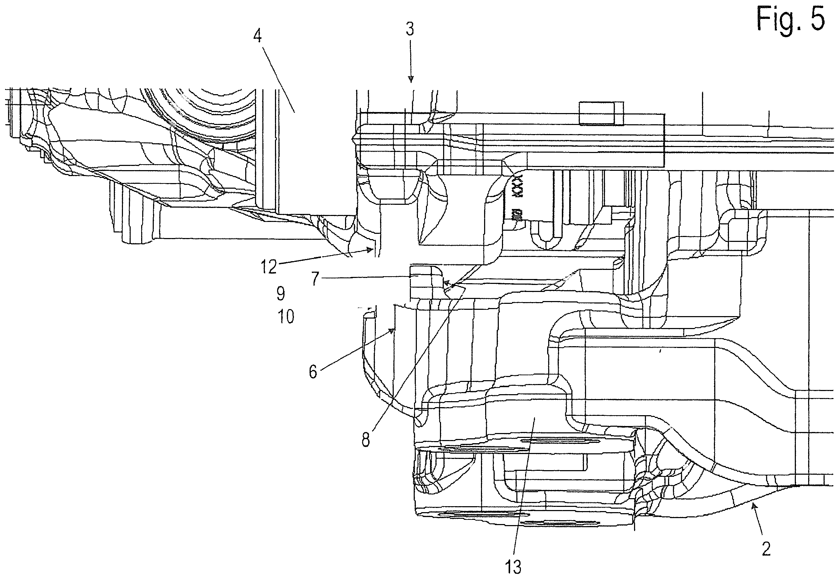

Eine der Bremsscheibe 22 ferne zweite Fläche 10 ist so positioniert, dass diese in einer mit der Referenzfläche 12 des Bremssattels 3 fluchtenden Position des Bremssattels 3 ein maximal zulässiges Verschleißmaß anzeigt. Eine solche Relativposition des Bremssattels 3 zum Bremsträger 2 ist in **Fig. 5** gezeigt.

Die Möglichkeit, diese beiden Relativpositionen des Bremssattels 3 zum Bremsträger 2 zu erkennen, ist prinzipiell hinreichend für die Verschleißerkennung und damit für die Planung von Wartungsarbeiten an der Scheibenbremse 1 hinsichtlich der Auswechslung der Bremsbeläge 23, 24 bzw. der Bremsscheibe 22.

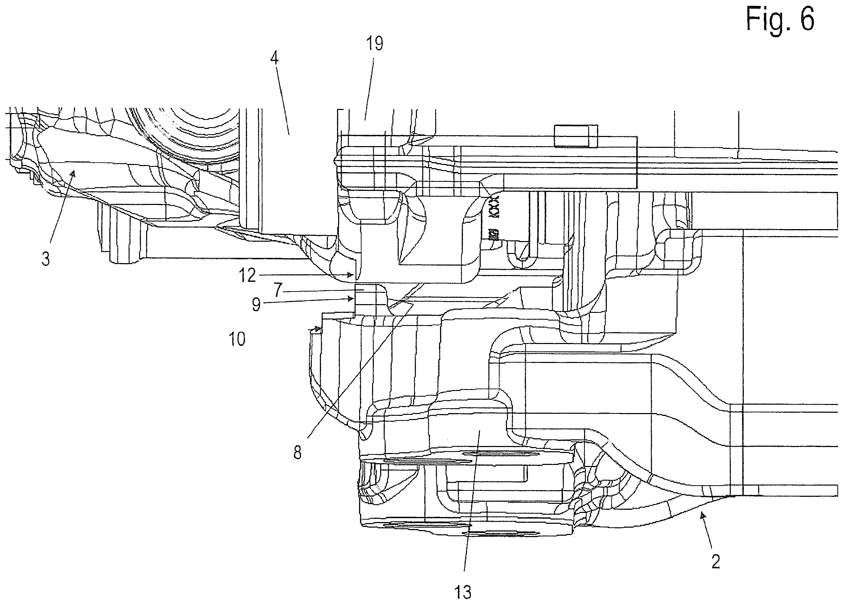

Bei der in den **Fig. 1****,** **2** **und** 4 bis 6 gezeigten bevorzugten Ausführungsvariante ist zwischen der der Bremsscheibe 22 nahen ersten Fläche 8 und der der Bremsscheibe 22 fernen zweiten Fläche 10 eine dritte Fläche 9 so positioniert ist, dass diese in einer mit der Referenzfläche 12 des Bremssattels 3 fluchtenden Position des Bremssattels 3 das halbe maximal zulässige Verschleißmaß anzeigt. Diese Relativposition des Bremssattels 3 zum Bremsträger 2 ist in Fig. 6 dargestellt.

Wie in den Fig. 1, 2 und 4 bis 6 gezeigt, bilden die Flanken der sich in Richtung des Bremssattels 3 erstreckenden Erhebung 7 die erste Fläche 8 und die dritte Fläche 9, wobei letztere der Anzeige des halben maximal zulässigen Verschleißmaßes dient.

Denkbar wäre auch, die Erhebung 7 in Verschieberichtung x des Bremssattels 3 so breit zu gestalten, dass die beispielsweise in Fig. 4 linke Flanke der Erhebung 7 die zweite Fläche 10, anzeigend das maximal zulässige Verschleißmaß, bildet.

Wie in den Fig. 1, 2 und 4 bis 6 des Weiteren gezeigt ist, sind die zweite Fläche 10 und die dritte Fläche 9 stufig zueinander angeformt, was zum einen die Herstellung dieser Flächen bei einem Gussprozess, bei dem der Bremsträger 2 gefertigt wird, erleichtert und zum zweiten eine bessere visuelle Erkennung der Relativposition des Bremssattels 3 zum Bremsträger 2 ermöglicht.

Wie insbesondere in den Fig. 4-6 zu erkennen ist, sind die das halbe zulässige Verschleißmaß anzeigende Fläche 9 und die das maximal zulässige Verschleißmaß anzeigende Fläche 10 mechanisch, insbesondere spanend nachbearbeitet und dadurch glatter bzw. ebener als dies mit einer reinen Gussgeometrie möglich ist, wodurch die Genauigkeit beim Ablesen des Verschleißmaßes nochmals erhöht ist.

Alternativ zu der in den Fig. 1, 2 und 4-6 dargestellten stufigen Ausbildung der Flächen 8, 9, 10 ist es auch denkbar, eine zweite Erhebung oder andere Geometrien anzuformen, die der Erkennbarkeit des jeweiligen Verschleißmaßes, insbesondere in mehreren definierten Abstufungen dienen.

Die stufige Ausbildung ermöglicht auch eine verbesserte Ertastbarkeit des jeweiligen Verschleißmaßes, falls die optische Erkennbarkeit bedingt durch bestimmte Einbaulagen eingeschränkt ist.

**Fig. 3** zeigt ein Teilstück des Bremssattels 3 in einer Einzeldarstellung.

Wie in dieser Figur zu erkennen ist, ist die Referenzfläche 12 an einem unteren Rand angeformt, der im montierten Zustand dem Flanschbereich 13 des Bremsträgers 2 und insbesondere des Materialvorsprungs 6 sehr nahe ist, wie in Fig. 1 beispielhaft gezeigt ist.

Die Referenzfläche 12 ist dabei in der hier gezeigten Ausführungsvariante schräg unterhalb der Aufnahmebohrung 20 für einen der Führungsholme 4 angeformt und damit bei einer visuellen Überprüfung leicht einsehbar, da das Fahrzeugrad im Wesentlichen den Sattelrücken 18 des Bremssattels 3 überdeckt.

Das Sattelgehäuse 19 und darunterliegende Bereiche, in denen die Aufnahmebohrungen 15 für die Führungsholme 4 und in der die Zuspanneinrichtung eingesetzt ist, werden dagegen vom Fahrzeugrad nicht überdeckt.

Da sowohl das Gehäuse des Bremssattels 3 als auch der Bremsträger 2 bevorzugt als Gussteile ausgeführt sind, ist die Anformung des Materialvorsprungs 6 mit den Flächen 8, 9, 10 sowie der Referenzfläche 12 am Bremssattel 3 in einfacher Weise möglich.

Durch die mechanische Nachbearbeitung der zur visuellen Verschleißerkennung dienenden Referenzfläche 12 und der Flächen 8, 9, 10 ist es insbesondere auch ermöglicht, in Zusammenschau mit einem in einer Ausführungsvariante zusätzliche in der Scheibenbremse 1 verbauten Summenverschleißsensor 21, wie es in den Figuren 7 und 8 gezeigt ist, auch einen Differenzverschleiß zwischen dem zuspannseitigen Bremsbelag 24 und dem reaktionsseitigen Bremsbelag 23 zu ermitteln.

Der Summenverschleißsensor 21 weist ein Aufnehmerelement auf, beispielsweise in Gestalt eines Hall-Sensors, Potentiometers oder eines induktiven Aufnehmerelements, das ein Signal ausgibt, in welchem der Summenverschleiß der Bremsbeläge 23, 24 und der Bremsscheibe 22 sowie der Betätigungshub überlagert sind. So wird der Summenverschleiß beispielsweise mittels eines Potentiometers, der die Verdrehung eines Nachstellgliedes bzw. einer Gewindespindel erfasst, mit dem bzw. der eine Beibehaltung eines vorbestimmten Lüftspiels zwischen der Bremsscheibe 22 und den Bremsbelägen 23, 24 erreicht wird.

So kann durch Gegenüberstellung eines von dem Summenverschleißsensor 21 ermittelten Verschleißwertes für den Summenverschleiß mit dem anhand der relativen Position der Referenzfläche 12 und der Flächen 8, 9, 10 abgelesenen Verschleißwert der visuellen Verschleißerkennung auch der Verschleißzustand des zuspannseitigen Bremsbelages 24 und somit auch ein Differenzverschleiß zwischen dem zuspannseitigen Bremsbelag 24 und dem reaktionsseitigen Bremsbelag 23 ermittelt werden.

Bei gleichmäßigem Verschleiß der Bremsbeläge 23, 24 stimmen der vom Summenverschleißsensor 21 ermittelte Verschleißwert mit dem abgelesenen Verschleißwert der visuellen Verschleißerkennung überein.

In den Figuren 7 und 8 sind beispielhaft zwei ungleichmäßige Verschleißzustände der Bremsbeläge 23, 24 dargestellt. Bei dem in Figur 7 dargestellten Beispiel ist der Verschleiß des Reibbelages 26 des reaktionsseitigen Bremsbelags 23 mit einer Restreibdicke d₁ deutlich größer als der Verschleiß des Reibbelages 28 des zuspannseitigen Bremsbelags 24 mit einer Restreibdicke d₂, d.h. die Reibbelagdicke d₁ ist deutlich kleiner als die Reibbelagdicke d₂.

Da die Verschiebung des Bremssattels 3 relativ zum Bremsträger 2 und relativ zum unverschlissenen Zustand des reaktionsseitigen Bremsbelags 23 maßgeblich durch den Verschleiß des reaktionsseitigen Bremsbelags 23 bedingt ist, zeigt der die Verschiebung des Bremssattels 3 gegenüber dem Bremsträger 2 einen deutlich größeren Verschleißwert an als der Summenverschleißsensor 21.

Bei dem in Figur 8 dargestellten Beispiel ist der Verschleiß des Reibbelages 26 des reaktionsseitigen Bremsbelags 23 mit einer Restreibdicke d₂ deutlich kleiner als der Verschleiß des Reibbelages 28 des zuspannseitigen Bremsbelags 24 mit einer Restreibdicke d₁.

Hier zeigt der die Verschiebung des Bremssattels 3 gegenüber dem Bremsträger 2 aufgrund der geringeren Verschiebung des Bremssattels 3 relativ zum Bremsträger 2 entsprechend einen deutlich kleineren Verschleißwert an als der Summenverschleißsensor 21.

In beiden Fällen lässt sich aufgrund der exakten Ablesemöglichkeit, bedingt durch die mechanisch nachbearbeitete ebene Referenzfläche 12 am Bremssattel 3 und die mechanisch nachbearbeiteten Flächen 8, 9 und10 am Bremsträger 2 auch das Verschleißmaß des zuspannseitigen Bremsbelags 24 ermitteln.

Denkbar ist darüber hinaus ein Vergleich des Verschleißmaßes mit einer weiteren Scheibenbremse auf einer anderen Fahrzeugseite oder Achse, so dass sich daraus ein Ungleichverschleiß zwischen den Bremsen erkennen lässt.

### Bezugszeichenliste

- 1: Scheibenbremse
- 2: Bremsträger
- 3: Bremssattel
- 4: Führungsholm
- 5: Bohrung
- 6: Materialvorsprung
- 7: Erhebung
- 8: Fläche
- 9: Fläche
- 10: Fläche
- 11: Lagerbereich
- 12: Referenzfläche
- 13: Flanschbereich
- 14: Belagaufnahmebereich
- 15: Aufnahmebohrung
- 16: Trägerhorn
- 17: Trägerhorn
- 18: Sattelrücken
- 19: Sattelgehäuse
- 20: Aufnahmebohrung
- 21: Summenverschleißsensor
- 22: Bremsscheibe
- 23: Bremsbelag
- 24: Bremsbelag
- 25: Belagträgerplatte
- 26: Reibbelag
- 27: Belagträgerplatte
- 28: Reibbelag

- x: Verschieberichtung
- d₁: Verschleißmaß
- d₂: Verschleißmaß

## Patentansprüche

1. Scheibenbremse (1) für ein Nutzfahrzeug, aufweisend
- einen eine Bremsscheibe (22) übergreifenden Bremsträger (2) mit einem Flanschbereich (13) zur Festlegung des Bremsträgers (2) an einer Fahrzeugachse des Nutzfahrzeugs und einem Aufnahmebereich (14) zur Abstützung wenigstens eines Bremsbelages (23, 24),
- einen in Richtung (x) einer Drehachse der Bremsscheibe (22) axial verschiebbar am Bremsträger (2) gehaltenen Bremssattel (3),
- wobei beidseits der Bremsscheibe (22) Bremsbeläge (23, 24) innerhalb des Bremssattels (3) positionierbar sind, die bei einer Bremsung mittels einer Zuspanneinrichtung gegen die Bremsscheibe (22) pressbar sind,
- eine Einrichtung zur visuellen Verschleißerkennung eines Bremsscheiben- und/oder Bremsbelagverschleißes, wobei
- die Einrichtung zur visuellen Verschleißerkennung einen im Flanschbereich (13) des Bremsträgers (2) angeformten Materialvorsprung (6) und eine am Bremssattel (3) angeformte, senkrecht zur Verschieberichtung (x) des Bremssattels (3) ausgerichtete, mechanisch nachbearbeitete ebene Referenzfläche (12) aufweist,
- **dadurch gekennzeichnet, dass** der Materialvorsprung (6) mehrere in Verschieberichtung des Bremssattels (3) hintereinander und senkrecht zur Verschieberichtung (x) des Bremssattels (3) ausgerichtete, mechanisch nachbearbeitete ebene Flächen (8, 9, 10) aufweist,
- wobei die Flächen (8, 9, 10) des Materialvorsprungs (6) und die Referenzfläche (12) des Bremssattels (3) derart positioniert sind, dass sie aus einer vorbestimmten Blickrichtung gleichzeitig visuell erkennbar sind.

2. Scheibenbremse nach Anspruch 1, **dadurch gekennzeichnet, dass** eine der Bremsscheibe (22) nahe erste Fläche (8) des Materialvorsprungs (6) so positioniert ist, dass diese in einer mit der Referenzfläche (12) des Bremssattels (3) fluchtenden Position des Bremssattels (3) den verschleißfreien Neuzustand der Bremsscheibe (22) und der Bremsbeläge (23, 24) anzeigt und eine der Bremsscheibe (22) ferne zweite Fläche (10) so positioniert ist, dass diese in einer mit der Referenzfläche (12) des Bremssattels (3) fluchtenden Position des Bremssattels (3) ein maximal zulässiges Verschleißmaß eines reaktionsseitigen Bremsbelags (23) anzeigt.

3. Scheibenbremse nach Anspruch 2, **dadurch gekennzeichnet, dass** zwischen der der Bremsscheibe (22) nahen ersten Fläche (8) und der der Bremsscheibe (22) fernen zweiten Fläche (10) eine dritte Fläche (9) so positioniert ist, dass diese in einer mit der Referenzfläche (12) des Bremssattels (3) fluchtenden Position des Bremssattels (3) das halbe maximal zulässige Verschleißmaß des reaktionsseitigen Bremsbelags (23) anzeigt.

4. Scheibenbremse nach einem der vorhergehenden Ansprüche, **dadurch gekennzeichnet, dass** der Materialvorsprung (6) eine auf einer dem Bremssattel (3) zugewandten Oberfläche (16) des Flanschbereichs (13) sich in Richtung des Bremssattels (3) erstreckende Erhebung (7) aufweist, deren Flanken die erste Fläche (8) und die zweite oder dritte Fläche (9, 10) bilden.

5. Scheibenbremse nach Anspruch 3 oder 4, **dadurch gekennzeichnet, dass** die zweite Fläche (10) und die dritte Fläche (9) stufig zueinander angeformt sind.

6. Scheibenbremse nach einem der vorhergehenden Ansprüche, **dadurch gekennzeichnet, dass** die Scheibenbremse einen Summenverschleißsensor (21) zur Ermittlung eines Gesamtverschleißwertes aus Bremsscheibenverschleiß sowie des Verschleißes der Bremsbeläge (23, 24) aufweist.

7. Scheibenbremse nach Anspruch 6, **dadurch gekennzeichnet, dass** der Summenverschleißsensor (21) einen Hall-Sensor, Potentiometer oder ein induktives Aufnehmerelement aufweist.

## Claims

1. Disc brake (1) for a commercial vehicle, having
- a brake carrier (2), engaging over a brake disc (22), having a flange area (13) for fastening the brake carrier (2) to an axle of the commercial vehicle and a receiving area (14) for supporting at least one brake pad (23, 24),
- a brake calliper (3) held on the brake carrier (2) so as to be axially displaceable in the direction (x) of an axis of rotation of the brake disc (22),
- wherein brake pads (23, 24) can be positioned on both sides of the brake disc (22) within the brake calliper (3), which can be pressed, in a braking operation, against the brake disc (22) by means of an application device,
- a visual wear detection means for detecting the wear of a brake disc and/or brake pad,
- wherein the visual wear detection means has a material protrusion (6) formed in the flange area (13) of the brake carrier (2) and a mechanically reworked planar reference surface (12) formed on the brake calliper (3) and orientated perpendicular to the displacement direction (x) of the brake calliper (3),
**characterised in that**
- the material protrusion (6) has a plurality of mechanically reworked planar surfaces (8, 9, 10) orientated one behind the other in the displacement direction of the brake calliper (3) and perpendicular to the displacement direction (x) of the brake calliper (3),
- wherein the surfaces (8, 9, 10) of the material protrusion (6) and the reference surface (12) of the brake calliper (3) are positioned such that they can be visually detected simultaneously from a predetermined viewing direction.

2. Disc brake according to claim 1, **characterised in that** a first surface (8) of the material protrusion (6) which is close to the brake disc (22) is positioned such that it indicates the new, wear-free condition of the brake disc (22) and the brake pads (23, 24) when the brake calliper (3) is in a position aligned with the reference surface (12) of the brake calliper (3), and a second surface (10) which is remote from the brake disc (22) is positioned such that it indicates a maximum permitted wear limit of a reaction-side brake pad (23) when the brake calliper (3) is in a position aligned with the reference surface (12) of the brake calliper (3).

3. Disc brake according to claim 2, **characterised in that** a third surface (9) is positioned between the first surface (8) which is close to the brake disc (22) and the second surface (10) which is remote from the brake disc (22) such that the third surface (9) indicates half the maximum permitted wear limit of the reaction-side brake pad (23) when the brake calliper (3) is in a position aligned with the reference surface (12) of the brake calliper (3).

4. Disc brake according to one of the preceding claims, **characterised in that** the material protrusion (6) has a raised portion (7) extending in the direction of the brake calliper (3) on a surface (16) of the flange area (13) which faces towards the brake calliper (3), the flanks of the raised portion (7) forming the first surface (8) and the second or third surface (9, 10).

5. Disc brake according to claim 3 or 4, **characterised in that** the second surface (10) and the third surface (9) are formed in a stepped manner relative to each other.

6. Disc brake according to one of the preceding claims, **characterised in that** the disc brake has a total wear sensor (21) for determining the total amount of wear from the brake disc wear and the wear of the brake pads (23, 24).

7. Disc brake according to claim 6, **characterised in that** the total wear sensor (21) has a Hall sensor, a potentiometer or an inductive recording element.

## Revendications

1. Frein (1) à disque d'un véhicule utilitaire, comportant
- un flasque (2) de frein chevauchant un disque (22) de frein et ayant une partie (13) de bride pour la fixation du flasque (2) de frein à un essieu du véhicule utilitaire et une partie (14) de réception pour l'appui d'au moins une garniture (23, 24) de frein,
- un étrier (3) de frein maintenu sur le flasque (2) de frein déplaçable axialement en direction (x) d'un axe de rotation du disque (22) de frein,
dans lequel
- des deux côtés du disque (22) de frein peuvent être mis en position à l'intérieur de l'étrier (3) de frein des garnitures (23, 24) de frein, qui, lors d'un freinage, peuvent être, au moyen d'un dispositif de serrage, pressées sur le disque (22) de frein,
- un dispositif de détection visuelle de l'usure d'un disque de frein et/ou de l'usure d'une garniture de frein,
dans lequel
- le dispositif de détection visuelle de l'usure a une saillie (6) de matériau venue de moulage avec la partie (13) de bride du flasque (2) de frein et une surface (12) de référence plane réusinée mécaniquement, venue de moulage avec l'étrier (3) de frein et orientée perpendiculairement à la direction (x) de déplacement de l'étrier (3) de frein,
- **caractérisé en ce que** la saillie (6) de matériau a plusieurs surfaces (8, 9, 10) planes finies mécaniquement, dirigées les unes derrière les autres dans la direction de déplacement de l'étrier (3) de frein et orientées perpendiculairement à la direction (x) de déplacement de l'étrier (3) de frein,
- dans lequel les surfaces (8, 9, 10) de la saillie (6) de matériau et la surface (12) de référence de l'étrier (3) de frein sont placées de manière à pouvoir être détectées visuellement en même temps, à partir d'une direction de vision définie à l'avance.

2. Frein à disque suivant la revendication 1, **caractérisé en ce qu'**une première surface (8), proche du disque (22) de frein, de la saillie (6) de matériau est placée de manière à ce que celle-ci indique, dans une position en alignement avec la surface (12) de référence de l'étrier (3) de frein, l'état nouveau sans usure du disque (22) de frein et des garnitures (23, 24) de frein, et une deuxième surface (10), loin du disque (22) de frein est placée de manière à ce que celle-ci indique dans une position, en alignement avec la surface (12) de référence de l'étrier (3) de frein, de l'étrier (3) de frein, une mesure d'usure admissible au maximum d'une garniture (23) de frein du côté de la réaction.

3. Frein à disque suivant la revendication 2, **caractérisé en ce qu'**entre la première surface (8), proche du disque (22) de frein, et la deuxième surface (10), loin du disque (22) de frein, une troisième surface (9) est placée de manière à ce que celle-ci indique, dans une position de l'étrier (3) de frein, en alignement avec la surface (12) de référence de l'étrier (3) de frein, la demi-mesure d'usure admissible au maximum de la garniture (23) de frein du côté de la réaction.

4. Frein à disque suivant l'une des revendications précédentes, **caractérisé en ce que** la saillie (6) de matériau a, sur une surface (16), tournée vers l'étrier (3) de frein, de la partie (13) de bride, une surélévation (7), qui s'étend dans la direction de l'étrier (3) de frein et dont les flancs forment la première surface (8) et la deuxième ou la troisième surface (9, 10).

5. Frein à disque suivant la revendication 3 ou 4, **caractérisé en ce que** la deuxième surface (10) et la troisième surface (9) viennent de moulage en formant un palier l'une par rapport à l'autre.

6. Frein à disque suivant l'une des revendications précédentes, **caractérisé en ce que** le frein à disque a un capteur (21) d'usure somme de détermination d'une valeur d'usure totale, à partir de l'usure du disque de frein, ainsi que de l'usure des garnitures (23, 24) de frein.

7. Frein à disque suivant la revendication 6, **caractérisé en ce que** le capteur (21) d'usure somme a un capteur de Hall, un potentiomètre ou un élément inductif de capteur.
